# EUROPÄISCHE PATENTSCHRIFT

(11) **EP 3 907 433 B1**
(45) Veröffentlichungstag und Bekanntmachung des Hinweises auf die Patenterteilung: **16.04.2025**
(21) Anmeldenummer: 21170058.8
(22) Anmeldetag: 23.04.2021
(51) Int. Cl.: F24D 3/14

(54) **VERFAHREN ZUR EINRICHTUNG EINER FUSSBODENHEIZUNG UND FUSSBODENHEIZUNG**
METHOD OF INSTALLING UNDERFLOOR HEATING AND UNDERFLOOR HEATING
PROCÉDÉ DE MISE EN PLACE D'UN CHAUFFAGE AU SOL ET CHAUFFAGE AU SOL

(30) Priorität: 06.05.2020 DE 102020112309
(43) Veröffentlichungstag der Anmeldung: 10.11.2021
(73) Patentinhaber: Schmöle GmbH, 58730 Fröndenberg (DE)
(72) Erfinder: Neumann, Till, 58640 Iserlohn (DE)
(74) Vertreter: Roche, von Westernhagen & Ehresmann

(56) Entgegenhaltungen:
- EP-A2- 1 512 933
- DE-A1- 102004 014 468
- DE-U1- 29 715 643
- FR-A1- 2 483 593
- KR-A- 20020 079 720

## Beschreibung

Die vorliegende Erfindung betrifft zunächst ein Verfahren zur Einrichtung einer Fußbodenheizung.

Hierzu ist es aus dem Stand der Technik grundsätzlich bekannt, von einer sogenannten "Coil" ein endloses, formbares Kunststoffrohr abzuziehen und in einer benötigten Form schleifenartig auf einer Folie zu verlegen, welche typischerweise auf dem Rohboden eines zu beheizenden Raumes aufliegt. Das verlegte Kunststoffrohr wird dann mithilfe von besonderen Klammern am Boden festgelegt und im Anschluss an diese Festlegung mit Estrich übergossen.

In der Praxis haben sich die Kunststoffrohre allerdings aufgrund ihres großen Durchmessers als sehr raumgreifend herausgestellt, sodass eine dicke Estrich-Schicht notwendig wird, um das verlegte Rohr vollständig zu überdecken.

Daher ist es aus dem Stand der Technik weiterhin bekannt, anstelle der Kunststoffrohre Metallrohre zu verwenden, wobei die Rohre, je nach Gebäuderaum-Form, vor Ort konfiguriert bzw. zusammengesteckt, lose auf dem Rohboden aufgelegt und dann mit Estrich übergossen werden.

Auch diese Art der Einrichtung einer Fußbodenheizung stellt sich aber als verbesserungswürdig heraus. Insbesondere ergibt sich eine recht aufwendige Installation, welche nur für einen sehr erfahrenen Fachmann - unter hohem Zeit- und Arbeitsaufwand - durchführbar ist.

Auch sind Fußbodenheizungen als Trockensystem bekannt, bei welchen die Rohrsysteme - im Gegensatz zum oben beschriebenen Nasssystem überhaupt nicht mit Estrich umgossen werden, sondern bspw.

in Kassetten oder Verschalungen oder ähnlichem angeordnet sind, welche dann den Boden ausbilden, wobei diese Systeme aber sehr teuer sind. Ein solches System ist beispielsweise in der DE 297 15 643 U1 offenbart.

Ein anderes Trockensystem offenbart die EP 1 512 933 A2, gemäß welcher Wärmeleitplatten aus expandiertem Graphit in Fußbodenheizungen eingesetzt werden.

Aufgabe der vorliegenden Erfindung ist es daher, ein Verfahren bereitzustellen, welches trotz Verwendung von gießfähigem Estrich eine vereinfachte Einrichtung einer Fußbodenheizung ermöglicht.

Die vorliegende Erfindung löst diese Aufgabe zunächst mit den Merkmalen des Patentanspruches 1, und demnach insbesondere durch die folgenden Verfahrensschritte:
- Fertigstellen eines Zwischenproduktes, umfassend eine, insbesondere rechteckige, Trägerplatte aus Metall, an dessen einer Seite ein Rohrsystem aus Metall, zum Leiten eines Mediums, von mindestens einem Wärmeleitelement, festgelegt ist,
- Füllen eines von dem Rohrsystem ausgebildeten Zwischenraumes mit gegossenem Estrich.

Mit anderen Worten wird im erfindungsgemäßen Verfahren eine handhabbare Einheit mit einem an einer Trägerplatte aus Metall angeordneten Rohrsystem bereitgestellt, welche einfach verleg- und anschließbar ist. Diese kann auch als "teilverlegungsfähig" bezeichnet werden.

Im einfachsten Fall können somit zur Einrichtung einer Fußbodenheizung industriell vorgefertigte Zwischenprodukte nach Art von Fliesen auf einem Rohboden verlegt werden.

Erfindungsgemäß wird also zunächst an einem Ort ein Zwischenprodukt erstellt, welches insbesondere handhabbar bzw. kompakt, händelbar und/oder gut transportierbar ausgebildet ist. Dieses Zwischenprodukt kann dann an einen anderen Ort verbracht werden, an dem die Fußbodenheizung erstellt werden soll, und braucht dann vor Ort nur noch, bspw. nach Art einer Fliesenverlegung, auf dem Rohboden angeordnet zu werden (oder auf einer darauf aufliegenden Schicht, bspw. einer Folie oder ähnlichem). Das Zwischenprodukt ist also sehr schnell verlegbar und daher hochkomfortabel.

Insofern wird eine Art "Plug and Play"-System für Fußbodenheizungen bereitgestellt, bei welchem eine denkbar einfache Montage gewährleistet ist. Insbesondere brauchen keine Kunststoffrohrabschnitte mehr unter Spannung von einer "Coil" abgezogen zu werden, und diese Rohre müssen dann auch nicht mehr über Klammern extra am Boden befestigt werden, sodass die körperliche Arbeit für den Verlegenden deutlich reduziert wird (es wird ein "rückenschonendes" Verlegen einer Fußbodenheizung ermöglicht).

Dadurch, dass das Rohrsystem aus Metall besteht, kann dieses dünnere Wände aufweisen als ein Kunststoffrohrsystem, was zu einem geringeren Rohrdurchmesser führt. Dieser resultiert wiederum in einer geringeren Dicke/Stärke des Gesamtbodens, da nur noch ein Rohr mit einem geringeren Durchmesser von Estrich überdeckt sein muss, sodass die Estrich-Schicht insgesamt niedriger ausfallen kann (was zu einem geringeren Estrich-Verbrauch führt). Eine dünnere Estrichschicht ist außerdem schneller aufheizbar.

Dadurch, dass das Rohrsystem auf einer Trägerplatte angeordnet ist, kann das Zwischenprodukt insgesamt auch besser transportiert werden, bspw. da es gestapelt werden kann. Im Gegensatz zu einem reinen Rohrmäander ohne Trägerplatte kann ein erfindungsgemäßes Zwischenprodukt auch besser gehändelt werden, da es aufgrund der Trägerplatte nicht einfach ineinanderrutschen und verkanten kann.

Da die Zwischenprodukte typischerweise an einem zweiten (Produktions-)Ort, bspw. in einer Produktionshalle oder ähnlichem, erstellt werden und an einem ersten, entfernten Ort zur Einrichtung einer Fußbodenheizung eingesetzt werden, kann im Gegensatz zu einem Verfahren des Standes der Technik auch der Logistikaufwand minimiert werden: So wird bei dem Verfahren des Standes der Technik bspw. die Anzahl benötigter Kunststoffrohr-Coils grob geschätzt. Dies kann zur Folge haben, dass beim tatsächlichen Verlegen der Fußbodenheizung dann entweder zu wenig Material vorhanden ist (sodass sich Wartezeiten für die Nachbeschaffung von weiteren Coils ergeben) oder, dass die Coils im Überschuss vorhanden sind (und anschließend wieder kostenpflichtig abtransportiert werden müssen).

Das vorliegende Verfahren kann dabei den Schritt einer Fußbodenheizungs-Raumplanung umfassen. Hierbei kann man genau festlegen, wie viele Zwischenprodukte für die Einrichtung einer Fußbodenheizung benötigt werden, und es kann eine exakte Anzahl von Zwischenprodukten (bspw. aus dem Lager eines zweiten Ortes) an den ersten Ort verbracht werden. Ein Rücktransport von überflüssigen Zwischenprodukten oder eine Nachbestellung ist insofern nicht notwendig.

Zur Erreichung einer optimierten Lagerung, eines verbesserten Transportes und insbesondere einer verbesserten Montierbarkeit, kann die Trägerplatte typischerweise nach Art einer Fliese ausgebildet sein.

Die Trägerplatte ist demnach üblicherweise rechteckig und/oder auf einer Seite flach bzw. plan ausgebildet. Beispielsweise kann sie im Wesentlichen quadratisch sein.

Insbesondere beträgt das Seitenverhältnis weniger als 5:1, vorteilhafterweise weniger als 4:1, weiter vorteilhafterweise weniger als 2:1. Insofern kann bei der Trägerplatte - im Gegensatz bspw. zu einem rein streifenartigen Element - von einer (voll-)flächigen Platte gesprochen werden.

Die kürzere Seite der Trägerplatte weist dabei bspw. eine Länge von mindestens 30 cm auf, weiter vorteilhafterweise von mindestens 40 cm, noch weiter vorteilhafterweise von mindestens 50 cm (gleiches gilt übrigens auch für die andere Seite, welche bei einer Abweichung von einer quadratischen Form dann natürlich jeweils länger ausgebildet ist).

Erfindungsgemäß ist die Trägerplatte metallisch ausgebildet, um eine optimierte Wärmeübertragung zu ermöglichen. Auf diese Weise kann die Wärme eines in dem Rohrsystem geleiteten Mediums noch besser an die Oberseite des Fußbodens abgegeben werden als wenn lediglich ein Metall-Rohrsystem (ohne Trägerplatte) im Einsatz wäre. Dies haben umfangreiche Messungen der Anmelderin ergeben und ist dadurch begründbar, dass durch die Trägerplatte eine verbesserte Wärme-Querverteilung erreicht wird (der Querverteilungswiderstand sinkt).

Insbesondere kann nämlich auf diese Weise der Bereich zwischen einzelnen Rohrabschnitten des Rohrsystems wärmetechnisch überbrückt werden. Mit anderen Worten kann die Trägerplatte dazu dienen, Wärme optimiert in den Bereich zwischen einzelnen Rohrabschnitten des Rohrsystems zu leiten.

Aufgrund des Transferbleches/der Trägerplatte wird die Verteilung der Wärme (quer zu den geraden Abschnitten bzw. in Längsrichtung) verbessert. Hierdurch steigt die durchschnittliche Oberflächentemperatur der Fußbodenheizung. Gegenüber einer konventionellen Fußbodenheizung des Standes der Technik kann somit die Vorlauftemperatur gesenkt werden, sodass bei einer vergleichbaren Leistung ein niedrigerer Energieverbrauch aufgrund der niedrigeren Vorlauftemperatur entsteht.

Im Besonderen gilt dies für eine Mäanderform des Rohrsystems (welche typischerweise mehrere parallele, vorzugsweise gerade, Abschnitte aufweist, die durch kurvige oder bogenförmige Abschnitte verbunden sind).

Insbesondere der Bereich zwischen zwei benachbarten (geraden) Abschnitten des Rohrsystems kann wärmetechnisch überbrückt werden.

Mit anderen Worten kann man durch den Einsatz einer Trägerplatte auf kürzester Linie von einem geraden Abschnitt zu einem benachbarten geraden Abschnitt des Rohrsystems gelangen, ohne das Zwischenprodukt verlassen zu müssen, da der Bereich dazwischen von der Trägerplatte überbrückt wird (bei einem Rohrmäander ohne Trägerplatte wäre dies nicht möglich, da dort der Bereich zwischen den geraden Abschnitten nicht überbrückt wird, sondern vollständig freigelassen ist oder später mit Estrich ausgefüllt wird).

Messungen haben insbesondere ergeben, dass der Rohrabstand, also der Abstand zwischen zwei parallelen (geraden) Abschnitten eines mäanderförmigen oder harfenförmigen Rohrsystems, zwischen 100 und 400 mm betragen sollte, vorzugsweise zwischen 200 und 270 mm, weiter vorzugsweise zwischen 240 und 260 mm. Es hat sich herausgestellt, dass bspw. ein Rohrabstand von 250 mm nur in einer vernachlässigbar schlechteren Wärmeverteilung resultiert als ein Rohrabstand von 150 mm, wobei der weitere Rohrabstand natürlich ökonomisch sinnvoller ist, da mehr Material eingespart werden kann.

Besagte Messungen haben des Weiteren ergeben, dass ein Aluminiumblech als Trägerplatte mit einer Dicke von 0,6 mm wärmetechnisch nicht wesentlich schlechter abschneidet, als eine Aluminiumträgerplatte mit einer Dicke von 1 mm. Vorzugsweise kann somit also eine Aluminum-Trägerplatte von zwischen 0,4 und 0,8 mm verwendet werden, insbesondere von zwischen 0,5 und 0,7 mm Dicke.

Die Trägerplatte besteht gemäß der bevorzugsten Ausführungsform aus Aluminium (oder weist einen sehr hohen Aluminium-Anteil auf). Es handelt sich mithin um eine Aluminium-Trägerplatte.

Die Metall-Trägerplatte weist dabei typischerweise eine Mindeststärke von 0,3 mm auf, weiter vorteilhafterweise eine Dicke von mindestens 0,5 mm, und noch weiter vorzugsweise von mindestens 0,6 mm.

Die Trägerplatte ist hierbei insbesondere mathematisch konvex ausgebildet, das heißt, dass jeder Punkt auf der Trägerplatte mit jedem anderen mithilfe einer geraden Strecke verbindbar ist, ohne dass diese Strecke die Trägerplatte verlässt.

Das an der Trägerplatte festgelegte Rohrsystem ist typischerweise - wie bereits beschrieben - mäanderförmig ausgeführt. Es kann sich bspw. um einen einstückigen (stoffschlüssigen) Mäander handeln, welcher an der Trägerplatte festgelegt wird.

Grundsätzlich sind aber auch andere Formen vorstellbar, bspw. eine Harfenform, bei welcher mindestens zwei parallele, insbesondere gerade Abschnitte, in ihren Endbereichen zusammengeführt werden.

Insbesondere weist das Rohrsystem also mehrere (mindestens zwei) parallele, gerade Abschnitte auf. Diese Abschnitte sind beide/alle mittelbar oder unmittelbar an der Trägerplatte fest angeordnet. Insbesondere stehen diese Abschnitte typischerweise nicht über die Kontur der Trägerplatte hervor.

Gemäß einer bevorzugten Ausführungsform der Erfindung ist das Rohrsystem einstückig ausgebildet, was die Montage an der Trägerplatte vereinfacht. Zusätzlich zu dem Rohrsystem kann das Zwischenprodukt aber bspw. auch noch Anschlussstücke oder ähnliches an dem Rohrsystem aufweisen, welche mit diesem nicht zwangsläufig materialeinheitlich-stoffschlüssig ausgebildet sein müssen, sondern lediglich an dem Rohrsystem befestigt sein können.

Bei dem im Rohrsystem geführten Medium handelt es sich typischerweise um erwärmtes Wasser.

Gemäß der bevorzugsten Ausführungsform wird als Rohrmaterial Kupfer eingesetzt. Es handelt sich also typsicherweise um ein Kupfer-Rohrsystem.

Das Rohrsystem ist erfindungsgemäß an einer Seite der Trägerplatte angeordnet, bei einer im Wesentlichen waagerechten Ausrichtung der Trägerplatte (wie sie typischerweise im Fußbodenbereich zu finden ist) also entweder auf der Oberseite der Trägerplatte oder an der Unterseite der Trägerplatte. Das Wärmeleitelement ist demnach auf derselben Seite der Trägerplatte angeordnet, und das in dem Rohrsystem geführte Medium wird ebenfalls selbige Seite entlanggeführt.

Das Rohrsystem ist an der Trägerplatte erfindungsgemäß mit Wärmeleitelementen befestigt. Wärmeleitelemente sind hierbei typischerweise den geraden Abschnitten eines Rohrsystems zugeordnet.

Ein Wärmeleitelement übergreift das Rohrsystem üblicherweise abschnittsweise und ist typsicherweise auf beiden Seiten des Rohres einer Trägerplatte befestigt (grundsätzlich sind aber auch Lösungen vorstellbar, bei denen das Wärmeleitelement lediglich einseitig an der Trägerplatte befestigt ist und/oder im zentralen Bereich einen Einführschlitz für das Rohrsystem aufweist oder ähnliches).

Wärmeleitelemente werden an der Trägerplatte typischerweise entweder verklebt oder auf andere, insbesondere mechanische, Art und Weise befestigt (zum Beispiel formschlüssig). Insbesondere können mehrere streifenartige Wärmeleitelemente vorgesehen sein.

Bei dem Element kann es sich insbesondere um ein Wärmeleitblech handeln, das grundsätzlich eine größere Stabilität aufweist als bspw. eine Wärmeleitfolie, welche (insbesondere in einer selbstklebenden Ausführungsform) grundsätzlich aber erfindungsgemäß auch als Wärmeleitelement eingesetzt werden kann.

Entscheiden ist hierbei, dass das Wärmeleitelement gute Wärmeleiteigenschaften aufweist, um die Wärmeübertragung des gesamten Zwischenproduktes zu optimieren und gleichzeitig geeignet ist, das Rohrsystem an der Trägerplatte festzulegen.

Ein vorteilhafterweise eingesetztes Wärmeleitblech kann insbesondere federelastische Eigenschaften aufweisen, was die Festlegung des Rohrsystems an der Trägerplatte noch optimiert.

Bevorzugt werden mehrere (also mindestens zwei) gerade Bereiche des Rohrsystems von einem, vorzugsweise streifenförmigen, Wärmeleitelement übergriffen und festgelegt.

Das Wärmeleitelement besteht bevorzugt aus Metall oder enthält dieses (bspw. wird es von einem Metallblech ausgebildet oder einer Metallfolie oder ähnlichem).

Erfindungsgemäß ist vorgesehen, dass mindestens ein Zwischenraum des Rohrsystems mit Estrich ausgegossen wird. Als Zwischenraum sind hierbei Bereiche zwischen den Abschnitten des Rohrsystems zu verstehen. Auf einen Rohrmäander bezogen bedeutet dies insbesondere, dass zwei gerade Abschnitte des Mäanders zwischen sich einen Zwischenraum ausbilden. Dieser Zwischenraum ist dann (wie auch die beiden diesen umgebenden Abschnitte des Rohrsystems) typischerweise (unmittelbar) an oder über der Trägerplatte angeordnet.

Üblicherweise wird der gesamte Bereich um das Rohrsystem herum (auf besagter Seite der Trägerplatte) mit Estrich gefüllt. Je nach Ausgestaltung kann der Estrich hierbei bspw. auch in den Bereich zwischen Wärmeleitelement und Rohrsystem eintreten (abhängig davon, wie das Wärmeleitelement ausgebildet ist, bzw. wie die Art der Festlegung des Rohrsystems über das Wärmeleitelement erfolgt).

Unter gegossenem Estrich versteht man dabei typischerweise eine Schicht oder Schichten (insbesondere aus Estrichmörtel), die auf der Baustelle direkt auf dem Untergrund, mit oder ohne Verbund, oder auf eine zwischenliegende Trenn- oder Dämmschicht gegossen werden, um einen gleichmäßigen Untergrund für einen Bodenbelag oder die unmittelbare Nutzbarkeit bzw. eine vorgegebene Höhenlage zu erreichen.

Je nach Bindemittel können für den Estrich völlig unterschiedliche Materialien eingesetzt werden. Beispiele für einen derartigen Estrich sind Zementestrich, Gussasphaltestrich, Kalziumsulphatestrich, Magnesiaestrich oder auch Kunstharzestrich, wobei dies lediglich eine exemplarische Aufzählung ist.

Insbesondere kommt es auf die Zusammensetzung dabei nicht an, sondern auf die Eigenschaft als ausgleichender Bodenaufbauer.

Der Estrich wird erfindungsgemäß gegossen, was insbesondere eine Abgrenzung zu sogenanntem Trockenestrich darstellen soll, bei welchem der Estrich aus vorgefertigten Teilen besteht, welche auf der Baustelle kraftschlüssig verbunden werden.

In diesem Sinne handelt es sich bei dem erfindungsgemäßen Verfahren um ein Verfahren zur Herstellung einer Fußbodenheizung des Nasssystem-Typs, bei welchem das Rohrsystem mehr oder weniger vollständig vom Estrich umschlossen ist (bspw. im Vergleich zu einem Trockensystem, bei welchem sich die Rohre unterhalb des Bodenbelages in der Dämmschicht befinden).

Mit anderen Worten soll im Sinne dieser Erfindung jedes gießfähige Material als Estrich verstanden werden, welches dazu geeignet ist, insbesondere nach einer gewissen Aushärtung, einen Bodenbereich zu stellen oder (mit-)auszubilden.

Darauf, ob der Estrich gegossen wird nachdem oder bevor das Zwischenprodukt am Boden platziert ist, kommt es erfindungsgemäß zunächst nicht an. Spätere Ausführungen werden noch verdeutlichen, dass das Zwischenprodukt entweder vom Estrich übergossen oder in diesen eingetaucht werden kann.

Entscheidend ist jedoch, dass der Estrich typischerweise an einem ersten Ort gegossen wird, wobei es sich bei diesem ersten Ort um den Ort handelt, an welchem die Fußbodenheizung installiert werden soll. Der Estrich kann also bspw. lokal bezogen werden und braucht nicht von dem (zweiten) Ort des Fertigstellens des Zwischenproduktes, zum ersten entfernten Ort verbracht werden. Bei einem Estrich handelt es sich mithin um ein übliches, überall erhältliches Verbrauchsmaterial. Im Gegensatz zu dem hochspezifischen, typischerweise nur in wenigen Fachbetrieben an einem zweiten Ort hergestellten Zwischenprodukt.

In diesem Sinne kann das Füllen des oder der Zwischenräume (am ersten Ort) durch ein Übergießen des Zwischenproduktes mit Estrich erfolgen. Hierbei kann ein Zwischenprodukt (oder typischerweise mehrere) auf einem Bodenbereich, in welchem die Fußbodenheizung zu installieren ist, ausgelegt werden. Das Zwischenprodukt kann hierbei üblicherweise mit der von dem Rohrsystem abgewandten Seite, insbesondere der Unterseite, auf einem Rohboden oder auf einer auf diesem aufliegenden Schicht (Dämmschicht oder Folie oder ähnliches) aufgelegt werden. Eine Fixierung muss hierbei nicht zwingend erfolgen.

Optional kann aber auch eine Fixierung vorgesehen sein, bspw. mit separaten Klammern oder durch ein Verkleben des Zwischenproduktes auf dem Rohboden.

Insbesondere kann das Zwischenprodukt an seiner Unterseite auch eine gesonderte Klebschicht aufweisen, welche durch das Abziehen einer Folie aktivierbar sein kann. In diesem Fall ist an der von dem Rohrsystem abgewandten Seite der Trägerplatte zunächst eine Klebeschicht, und weiter außen eine (abziehbare) Schutzfolie oder ähnliches aufgebracht.

Gemäß der vorteilhaftesten Ausführungsform sind derartige Fixierungen durch eine Klebeschicht aber überhaupt nicht notwendig. Vielmehr können mehrere Zwischenprodukte, bspw. nach Art von Fliesen, auf dem Rohboden (oder einer hierauf angebrachten Schicht) verlegt werden.

Alternativ ist es vorstellbar, dass (statt gar keiner Fixierung) eine geringfügige Fixierung mit einer Fugenmasse erfolgt, wie sie bspw. von herkömmlichen Fliesen bekannt ist. Auf all dies kommt es gemäß der Erfindung zunächst aber nicht an. Es ist für die Erfindung vielmehr entscheidend, dass das Zwischenprodukt auf dem Rohboden verlegt wird, bevor der Estrich gegossen wird.

Das Gießen des Estrichs erfolgt, nachdem ein oder mehrere Zwischenprodukte an dafür vorgesehenen Stellen auf dem Boden verlegt wurden.

Typischerweise befindet sich das Rohrsystem also auf der Oberseite der verlegten Trägerplatte und wird von dem Estrich umgossen, wobei der gegossene Estrich hierbei typischerweise eben und gleichmäßig verläuft oder verteilt wird, sodass der ausgehärtete Estrich insgesamt einen nutzbaren Oberboden ausbildet. Die Oberseite des Rohrsystems ist in diesem Falle typischerweise vollkommen von Estrich überdeckt.

Gemäß einer anderen erfindungsgemäßen Ausführungsform kann ein entsprechender Ablauf aber auch gerade umgekehrt erfolgen: So kann zunächst auf einen Rohboden der Estrich gegossen oder vergossen werden, und anschließend kann der oder die Zwischenprodukt(e) dann von oben in den Estrich eingesetzt werden. Hierbei befindet sich das Rohrsystem typischerweise an der Unterseite der Trägerplatte (allerdings ist auch ein umgekehrter Einsatz vorstellbar, bei dem das Rohrsystem an der Oberseite befindlich ist). Es wird somit in den Estrich eingetaucht. Dabei kann es sich insbesondere um einen sogenannten "Tauchestrich" handeln.

Die Estrichschicht ist hierbei insbesondere so dick, dass zumindest das gesamte Rohrsystem in den Estrich eintauchbar ist. Vorzugsweise wird auch die gesamte Trägerplatte in die Estrichschicht eintauchen. Dies kann gemäß einer alternativen Ausgestaltung aber auch vermieden werden, sodass die Oberseite der Trägerplatte noch aus dem Estrich hervorschaut oder bündig mit diesem abschließt.

Bei dieser besonderen Ausführungsform ist allerdings darauf zu achten, dass das Verlegen bzw. Eintauchen des oder der Zwischenprodukte(s) zügig, also sehr zeitnah nach Gießen des Estrichs, erfolgt, bevor dieser zu sehr erhärtet und solange dieser noch auf gewisse Weise modellierbar ist.

Bei dem erstgenannten Fall, bei dem zunächst das Zwischenprodukt verlegt wird, ist diese zeitliche Abfolge naturgemäß nicht derart kritisch.

Gemäß einer bevorzugten Ausführungsform der Erfindung ist das Rohrsystem im Wesentlichen innerhalb der Kontur der Trägerplatte angeordnet. Dies bedeutet, dass bei einer Aufsicht auf die Seite der Trägerplatte an welcher das Rohrsystem gerade nicht angeordnet ist, nahezu nichts oder gar nichts vom Rohrsystem zu sehen ist. Bei dieser Formulierung sind aber geringfügige Überstande ausgenommen, bspw. sofern das Rohrsystem im Bereich seiner Anschlüsse leicht über die Kontur der Trägerplatte übersteht oder in seinen bogenförmigen Bereichen eine Seite der Trägerplatte leicht überragt.

In diesem Sinn soll "im Wesentlichen" insbesondere bedeuten, dass mindestens 75 % des Rohrsystems innerhalb der Kontur der Trägerplatte befindlich sind, also bei einer Ansicht der anderen Trägerplattenseite (an welcher das Rohrsystem gerade nicht angeordnet ist) maximal 25 % des Rohrsystems ersichtlich sind. Weiter insbesondere werden mindestens 90 % des Rohres kaschiert, sind also innerhalb der Kontur der Trägerplatte angeordnet.

Diese Formulierung soll insbesondere eine Abgrenzung zu streifenförmigen Trägerelementen bieten, an welchen nur ein sehr geringer Teil des Rohrsystems befestigt werden kann, während der Großteil des Rohrsystems über einen derartigen Streifen übersteht. Nichtsdestotrotz sind von der Erfindung im weitesten Sinne aber natürlich auch derartige streifenförmige Trägerelemente umfasst.

Gemäß einer weiteren vorteilhaften Ausführungsform der Erfindung weist das Rohrsystem mindestens einen geraden Abschnitt auf. Typischerweise weist das Rohrsystem mehrere gerade Abschnitte auf.

Dieser gerade Abschnitt soll erfindungsgemäß im Wesentlichen über seine gesamte Länge auf der Trägerplatte aufliegen bzw. an dieser anliegen, also mit dieser in Kontakt stehen. Typischerweise wird dies über die Festlegung durch die Wärmeleitelemente erreicht, welche einen derartigen Abschnitt im Wesentlichen über seine ganze Länge überspannen oder übergreifen können. Der Kontaktbereich zwischen einem solchen Abschnitt und der Trägerplatte besteht also im mathematischen Sinne im Wesentlichen aus einer Geraden bzw. einer geraden Strecke.

Bei derartigen Rohrsystemen auf Trägerplatten kann es üblich sein, dass einige Teile des Rohrsystems nicht auf der Trägerplatte aufliegen, sondern leicht von dieser abstehen. Dies gilt insbesondere für bogenförmige Bereiche, welche vorzugsweise zwischen geraden Abschnitten angeordnet sind.

Erfindungsgemäß können die geraden Abschnitte typischerweise parallel angeordnet sein, so bspw. bei einer Mäanderform des Rohrsystems oder einem harfenförmigen Rohrsystem.

Vorzugsweise sind mindestens zwei gerade Abschnitte vorgesehen, weiter vorzugsweise sind mindestens drei, noch weiter vorzugsweise deren vier oder mehr. Erfindungsgemäß werden diese geraden Abschnitte dabei typischerweise durch die Trägerplatte thermisch verbunden, sodass ein schnelleres Aufheizen des gesamten Fußbodens ermöglicht wird.

Wie bereits erwähnt besteht das Rohrsystem vorzugsweise aus Kupfer bzw. einem oder mehreren Kupferrohren.

Die Trägerplatte besteht vorzugsweise aus Aluminium und/oder weist eine Dicke von mindestens 0,3 mm auf. Sie ist vorzugsweise starr, also jedenfalls nicht vollständig biegeschlaff (wie bspw. eine Folie), ausgebildet und kann, muss aber nicht, eine gewisse Elastizität aufweisen.

Erfindungsgemäß ist bei dem vorliegenden Verfahren vorgesehen, dass die Fußbodenheizung an einem ersten Ort installiert bzw. fertiggestellt wird, wobei die Fertigstellung des Zwischenproduktes an einem zweiten, entfernten Ort erfolgt. Insbesondere erfolgt das Gießen des Estrichs dabei an dem ersten Ort.

Vorzugsweise ist hierbei vorgesehen, dass die Erfindung einen Verfahrenschritt des Verbringens des Zwischenproduktes von dem zweiten an den ersten Ort umfasst, bspw. einen Transport. Zwischen den beiden Orten können typischerweise mehrere Kilometer Entfernung liegen, insbesondere auch mehrere 100.

Das Zwischenprodukt kann dabei also an den ersten Ort transportiert werden, bei dem es sich um den Montageort handeln kann, also um den Ort, an dem sich der zu heizende Gebäuderaum befindet.

Unter dem Begriff "Ort" kann eine Lokalität verstanden werden, bspw. eine Stadt oder ein Gebäude oder auch eine Umgebung.

An dem Montageort kann Estrichmaterial bereits befindlich sein. Die Fertigstellung der Fußbodenheizung kann dann direkt und unmittelbar am Montageort erfolgen, bspw. durch einen am Montageort ansässigen Handwerker oder ein spezialisiertes Unternehmen, welches sich weiter insbesondere mit der Herstellung der Zwischenprodukte überhaupt nicht auskennen muss.

Für den Transport ist es insbesondere notwendig, dass das Zwischenprodukt handhabbar und transportabel ist.

Eines oder mehrere solcher Zwischenprodukte können dann gemeinsam an den (ersten) Montageort verbracht werden. An dem ersten Ort können eine oder mehrere Zwischenprodukte zur Fertigstellung der Fußbodenheizung genutzt oder eingesetzt werden.

Insbesondere kann das erfindungsgemäß Verfahren auch einen Arbeitsschritt umfassen, der eine Fußbodenheizungs-Raumplanung umfasst. Beispielsweise kann (computergestützt) die Verteilung entsprechender Zwischenprodukte im zu beheizenden Gebäuderaum (virtuell) festgelegt werden.

Auf diese Weise kann insbesondere auch bestimmt werden, wie viel Zwischenprodukte zur Herstellung einer gewünschten Fußbodenheizung überhaupt benötigt werden.

Hierbei können insbesondere auch (elektronische) Pläne erstellt werden, anhand deren eine spätere Montage oder Anordnung der Zwischenprodukte im Gebäuderaum (bzw. auf dessen (Roh-)Boden) erfolgen kann.

Mit anderen Worten kann die Fußbodenheizung softwarebasiert und/oder online konfigurierbar sein.

Gemäß einer besonders vorteilhaften Ausgestaltung der Erfindung kann im Rahmen des Verfahren vorgesehen sein, dass in einem Bereich der von der Fußbodenheizung zu bedienenden Fläche, in welchem kein Zwischenprodukt vorgesehen ist, ein Rohrsystem aus Metall verlegt wird, welches nicht an einer Trägerplatte angeordnet ist, mithin nicht Bestandteil eines erfindungsgemäßen Zwischenproduktes ist.

Dieses nicht an einer Trägerplatte angebrachte Rohrsystem kann vorzugsweise vom gleichen Anbieter bereitgestellt werden, wie das Zwischenprodukt und gemeinsam mit diesem zwischen dem zweiten und ersten Ort verbracht werden oder alternativ auch separat bereitgestellt werden, bspw. von einem lokalen Händler oder dem Installateur selber oder ähnlichem.

Bei diesem separaten Rohrsystem kann es sich vorzugsweise um einen Rohrmäander handeln, der typischerweise auch aus Kupfer besteht. Im Gegensatz zu einem Zwischenprodukt ist vor Ort eine flexiblere Anpassung an die Gegebenheiten möglich. So kann bspw. ein im Querschnitt rundes, gerades Rohr vor Ort in eine entsprechende, gewünschte Mäanderform gebogen und verlegt werden. Dieses andere Rohrsystem (ohne Trägerplatte) wird typischerweise auf herkömmliche Weise mit Estrich umgeben (also von diesem übergossen oder in diesen eingelegt).

Auch wenn ein solches Hilfsrohrsystem nicht die besonders guten Wärmeleiteigenschaften des Zwischenproduktes aufweist, so kann es dafür genutzt werden, an Stellen oder in Flächen des Bodens eingesetzt zu werden, welche für eine typischerweise rechteckige Trägerplatte nicht unbedingt zugänglich wären (bspw. weil die Form des Bodenbereichs dies nicht zulässt oder die Größe des Bodenbereichs).

Mithin kann dieses Hilfsrohrsystem Teil derselben Fußbodenheizung sein wie das oder die Trägerelement(e). Das Hilfsrohrsystem und das bzw. die Zwischenprodukt(e) können insbesondere auch leitungstechnisch miteinander verbunden sein.

Ein derartiges Hilfs-Rohrsystem kann auch im Rahmen einer oben genannten, insbesondere softwaregestützten, Planung berücksichtigt werden.

Erfindungsgemäß ist außerdem vorgesehen, dass mehrere Zwischenprodukte zur Herstellung der Fußbodenheizung (leitungstechnisch) verbunden werden, insbesondere im Rahmen der Heizungsmontage. Hierdurch können besonders große Fußbodenflächen abgedeckt werden, ohne dass die Handbarkeit eines einzelnen Zwischenproduktes oder dessen Transportierbarkeit beeinträchtigt wird.

Gemäß einem weiteren Aspekt der Erfindung wird die der Erfindung zugrundeliegende Aufgabe durch eine Fußbodenheizung nach Anspruch 10 gelöst. Es soll an dieser Stelle angemerkt werden, dass sämtliche in Bezug auf das Verfahren beschriebenen Vorteile und Ausführungsformen auch für die Fußbodenheizung bzw. das Zwischenprodukt der Fußbodenheizung gelten sollen.

Weitere vorteilhafte Ausgestaltungen der Erfindung ergeben sich aufgrund der nicht zitierten Unteransprüche, sowie aufgrund der nun folgenden Figurenbeschreibung.

In den Figuren zeigen:
- Fig. 1: in einer sehr schematischen, isometrischen Schrägaufsicht, die Oberseite eines erfindungsgemäßen Zwischenproduktes mit einem von Wärmeleitblechen festgelegten Kupferrohr-System,
- Fig. 2: in einer Ansicht, etwa gemäß Pfeil II in Fig. 1, eine Aufsicht auf ein bezüglich der Länge leicht abgewandeltes Zwischenprodukt,
- Fig. 3: in einer Ansicht, etwa gemäß Fig. 2, ein weiteres alternatives Zwischenprodukt, bei welchem das Rohrsystem nicht mäanderförmig sondern harfenförmig ausgebildet ist,
- Fig. 4a: in einer sehr schematischen, geschnittenen Seitenansicht, etwa gemäß Ansichtspfeil IV in Fig. 1, ein Verfahrensschritt zur Einrichtung einer erfindungsgemäßen Fußbodenheizung, bei welchem ein Zwischenprodukt gemäß Fig. 1 auf einem Rohboden aufliegt, bevor es mit Estrich übergossen wird,
- Fig. 4b: in einer Ansicht gemäß Fig. 4a, das Zwischenprodukt gemäß Fig. 4a, jedoch nach einem Übergießen mit Estrich und einer Fertigstellung der Fußbodenheizung,
- Fig. 5a: in einer Ansicht, etwa gemäß Fig. 4a, ein alternatives Herstellungsverfahren, bei welchem bereits eine Estrich-Schicht auf einem Rohboden frisch vergossen wurde und nunmehr das Zwischenprodukt gemäß Fig. 1 in umgekehrter Orientierung in den frisch gegossenen Estrich eingetaucht wird,
- Fig. 5b: in einer Ansicht gemäß Fig. 5a, die fertiggestellte Fußbodenheizung mit zwei unterschiedlichen, exemplarischen, teils gestrichelt angedeuteten Fußbodenhöhen, und
- Fig. 6: eine sehr schematische Aufsicht auf den Boden eines exemplarischen Gebäuderaums mit ausgelegten Zwischenprodukten, nach einer Herstellungsart gemäß Fig. 4, wobei bestimmte Zwischenbereiche von Hilfs-Rohrsystemen ohne Trägerplatte ausgelegt sind, und wobei der Estrich noch nicht gegossen wurde bzw. aus Gründen der Übersichtlichkeit fortgelassen bzw. transparent dargestellt ist.

Der nachfolgenden Figurenbeschreibung sei vorangestellt, dass gleiche oder vergleichbare Teile gegebenenfalls mit identischen Bezugszeichen versehen sind, teilweise unter Hinzufügung kleiner Buchstaben oder von Apostrophs. In den der Figurenbeschreibung nachfolgenden Patentansprüchen werden die in den Figuren und der Figurenbeschreibung verwendeten Bezugszeichen daher der Einfachheit halber gegebenenfalls ohne Apostrophs oder kleine Buchstaben verwendet, jedenfalls sofern die entsprechenden Gegenstände vergleichbar sind.

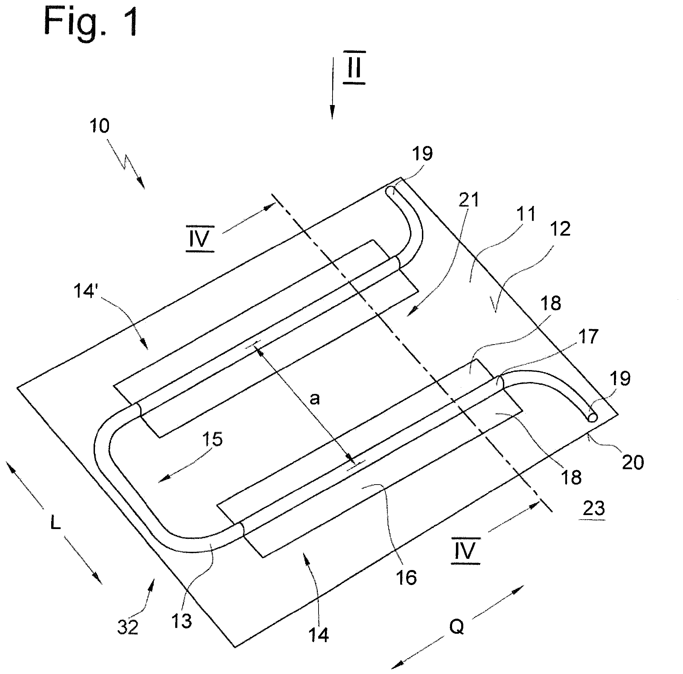

Fig. 1 zeigt hierbei zunächst eine Schrägaufsicht auf ein erfindungsgemäßes Zwischenprodukt 10 zur Einrichtung einer Fußbodenheizung.

Das Zwischenprodukt 10 ist so dargestellt, wie es an seinem Fabrikationsort 23 erstellt wird, noch bevor es zu dem Ort transportiert wird, an dem die Fußbodenheizung errichtet werden soll.

Das Zwischenprodukt 10 umfasst dabei zunächst eine Trägerplatte 11, welche typischerweise aus Aluminium bestehen kann und beispielsweise mehr als 0,3 mm dick ist. Die Trägerplatte ist in dem Ausführungsbeispiel gemäß Fig. 1 in etwa quadratisch ausgebildet, sodass ihre Erstreckung in Längsrichtung L in etwa ihrer Erstreckung in Querrichtung Q entspricht. Die Erstreckung in Längsrichtung L beträgt dabei bspw. zwischen 40 und 100 cm.

Auf der Oberseite 12 trägt die Trägerplatte 11 ein Rohrsystem 13, welches in den vorliegenden Ausführungsbeispielen mäanderförmig ausgebildet ist. Der Mäander umfasst hierbei exemplarisch eine Schleife mit zwei geraden Abschnitten 14 und 14'. Die geraden Abschnitte 14 und 14' sind über einen im Wesentlichen bogenförmigen Abschnitt 15 verbunden, wobei das gesamte Rohrsystem 13 im Wesentlichen einstückig, material-stoffschlüssig ausgebildet ist.

Im Inneren des Rohrsystems 13 kann bei einem späteren Einsatz in einer Fußbodenheizung typischerweise erhitztes Wasser geführt werden.

Die beiden geraden Abschnitte 14 und 14' des Rohrsystems 13 sind ausweislich Fig. 1 mit jeweils einem Wärmeleitelement 16, in dem dargestellten Ausführungsbeispiel exemplarisch einem Wärmeleitblech, an der Trägerplatte festgelegt. Die Wärmeleitbleche 16 können an der Trägerplatte 11 bspw. verklebt sein, alternativ oder zusätzlich auch vernietet oder ähnliches.

Die Wärmeleitelemente 16 bilden dabei eine zentrale Sicke 17 aus, welche die geraden Abschnitte 14 und 14' des Rohrsystems 13 im Wesentlichen kongruent übergreift.

Dabei bildet ein Wärmeleitelement 16 seitlich der Rohrabschnitte 14 und 14' Befestigungsabschnitte 18 aus, welche der Festlegung der Wärmeleitelemente 16 (und somit auch des Rohrsystems 13) an der Trägerplatte 11 dienen.

Durch die Wärmeleitelemente 16 liegen die geraden Abschnitte 14 und 14' des Rohrsystems 13 typischerweise unmittelbar an der Oberseite 12 der Trägerplatte 11 an.

Der in dem Ausführungsbeispiel nicht von einem Wärmeleitelement übergriffene bogenförmige Abschnitt 15 kann ebenfalls an der Oberseite 12 der Trägerplatte 11 anliegen oder gegebenenfalls auch leicht von dieser abstehen.

Die beiden Enden 19 des Rohrsystems 13 sind dann jeweils derart angeordnet, dass sie zum Rand 20 der Trägerplatte 11 hinführen, sodass ein Anschließen des Zwischenproduktes an ein weiteres, in Fig. 1 nicht dargestelltes Zwischenprodukt 10 problemlos möglich ist. Hierfür können an den Enden 19 auch Verbindungsstücke oder ähnliches vorgesehen sein (nicht dargestellt).

Eine Besonderheit gemäß Fig. 1 besteht des Weiteren darin, dass das Rohrsystem 13 ausweislich Fig. 1 vollständig innerhalb der Kontur der Trägerplatte 11 angeordnet ist. Das heißt, dass das Rohrsystem 13 nicht, auch nicht mit seinen Enden 19, über den Rand 20 der Trägerplatte 11 hervorsteht.

An der der Seite 12 entgegengesetzten Seite 32, in dem vorliegenden Ausführungsbeispiel auch als Unterseite 32 bezeichenbar, ist, was allerdings in Fig. 1 nicht erkennbar ist, kein Rohrsystem festgelegt. Vielmehr ist die Seite 32 glatt ausgeführt und kann so bspw. auf einen Rohboden plan aufgelegt werden.

Nicht dargestellt ist hierbei auch ein Ausführungsbeispiel bei welchem die Unterseite 32 eine Klebeschicht aufweist, welche von einer Abziehfolie für den Transport geschützt wird. Eine solche, jedoch nicht dargestellte, Ausführungsform mit Klebeschicht kann gegebenenfalls am Montageort der Fußbodenheizung aktiviert werden, indem die entsprechende Schutzfolie abgezogen wird.

Typischerweise ist eine Klebeschicht aber gar nicht notwendig, sodass ein Zwischenprodukt wie in Fig. 1 mit einer lediglich glatten, unbesetzten Unterseite 13 vollständig ausreicht.

Fig. 1 lässt insbesondere den großen Vorteil des erfindungsgemäßen Zwischenproduktes erkennen: So sind die beiden geraden Rohrabschnitte 14 und 14' zwar leitungstechnisch, wie aus dem Stand der Technik bekannt, über das Rohrsystem 13 miteinander verbunden. Im wärmeübertragungstechnischen Sinne sind diese beiden Rohrabschnitte 14 und 14' aber auch über die Trägerplatte 11 miteinander verbunden, nämlich über den zwischen ihnen angeordneten Verbindungsbereich 21, bei welchem es sich um einen Teil der Trägerplatte 11 handelt. Dadurch, dass der Verbindungsbereich 21 die beiden geraden Abschnitte 14 wärmetechnisch miteinander verbindet, wird insgesamt ein schnelles, homogenes Aufheizen des gesamten Zwischenproduktes im späteren Einsatz möglich. Dieses erfolgt insbesondere schneller als wenn man für den Heizungsbau lediglich ein Rohrsystem ohne Trägerplatte verwenden würde.

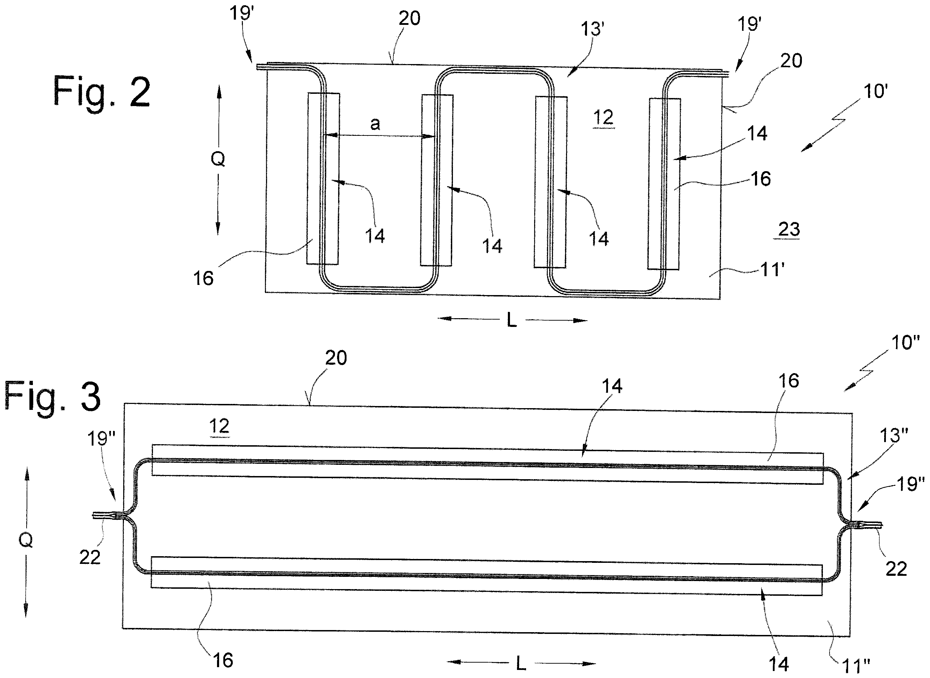

Fig. 2 zeigt dann eine Aufsicht, etwa gemäß Ansichtspfeil II in Fig. 1, auf ein leicht abgewandeltes Ausführungsbeispiel eines Zwischenproduktes 10', bei welchem das Rohrsystem 13' zwar ebenfalls mäanderförmig ausgebildet ist, jedoch mehr als zwei gerade Abschnitte 14 vorsieht, nämlich deren vier.

Auch hier ist jeder der geraden Abschnitte 14 von einem Wärmeleitelement 16, bspw. in Form eines Wärmeleitbleches, übergriffen. Auf diese Weise ist das Rohrsystem 13' an der Trägerplatte 11' festgelegt.

Da das Zwischenprodukt 10' gemäß Fig. 2 mehr Rohr-Schleifen vorsieht als dasjenige gemäß Fig. 1, ist naturgemäß auch die Erstreckung der Trägerplatte 11' in Längsrichtung L größer als in Fig. 1, während aber bspw. die Erstreckung in Querrichtung Q derjenigen gemäß dem Ausführungsbeispiel nach Fig. 1 identisch entspricht.

Dies erhöht insbesondere die Kompatibilität der beiden Zwischenprodukte 10 und 10' untereinander da diese bspw. in Längsrichtung L nebeneinander verlegt werden können und dann in Querrichtung Q nicht überstehen bzw. bündig anliegen.

Ein weiterer Unterschied des Zwischenproduktes 10' im Vergleich zum Zwischenprodukt 10 gemäß Fig. 1 besteht darin, dass, wie in Fig. 2 dargestellt, die Enden 19' des Rohrsystems 13' geringfügig über den Rand 20 der Trägerplatte 11' überstehen. Nichtsdestotrotz befindet sich auch das Rohrsystem 13' im Wesentlichen innerhalb der Kontur der Trägerplatte 11'.

Abschließend sei zu Fig. 2 angemerkt, dass der Rohrabstand a, also der Abstand zwischen zwei parallelen, geraden Rohrabschnitten 14, grundsätzlich demjenigen aus Fig. 1 entsprechen kann. In dem dargestellten Ausführungsbeispiel ist dieser Abstand a jedoch - lediglich aus exemplarischen Gründen - geringfügig größer, um die Variabilität der unterschiedlichen Zwischenprodukte zu verdeutlichen.

Fig. 3 zeigt dann ein weiteres Ausführungsbeispiel eines erfindungsgemäßes Zwischenproduktes 10", bei welchem das Rohrsystem 13" nicht mäanderförmig ausgebildet ist, sondern "harfenartig". Die dargestellte "Harfenform" sieht dabei ebenfalls (wie Fig. 1) zwei gerade Rohrabschnitte 14 vor. Diese erstrecken sich aber nicht in Querrichtung Q, sondern vielmehr in Längsrichtung L, sodass sich, insbesondere bei langen Trägerplatten 11", besonders lange gerade Abschnitte 14 ausbilden.

Fig. 3 ist dabei insbesondere lediglich exemplarisch zu verstehen. Würde man bspw. eine in Querrichtung Q breitere Trägerplatte verwenden, so würde man typischerweise auch mehr als zwei parallele Abschnitte 14 vorsehen, nämlich bspw. deren drei oder noch mehr. Alle geraden Abschnitte 14 münden bei einer Harfenform typischerweise in einem gemeinsamen Endbereich 19" (bzw. in deren zweien), und werden auf diese Weise zusammengeführt. Dem Ende 19" kann dabei insbesondere ein in Fig. 3 exemplarisch dargestelltes Aufsatzelement 22 zum weiteren Anschluss des Systems an ein (insbesondere einzelnes) Leitrrohr zugeordnet sein. Das Anschlussstück 22 kann dabei entweder als Teil des Rohrsystems 13" angesehen werden oder nicht. Unabhängig davon zeigt Fig. 3, dass ein Teil des Rohrsystems 13" auch hier über die Kontur der Trägerplatte 11" hinaussteht.

Sowohl in Fig. 2 als auch in Fig. 3 beträgt der Anteil des Rohrsystems 13' und 13", welcher sich innerhalb der Kontur der Trägerplatte befindet, aber mehr als 90 %, sodass das Rohrsystem auch in beiden Fällen "im Wesentlichen" innerhalb der Kontur der Trägerplatte angeordnet ist, welche insbesondere von deren äußeren Rändern 20 ausgebildet wird.

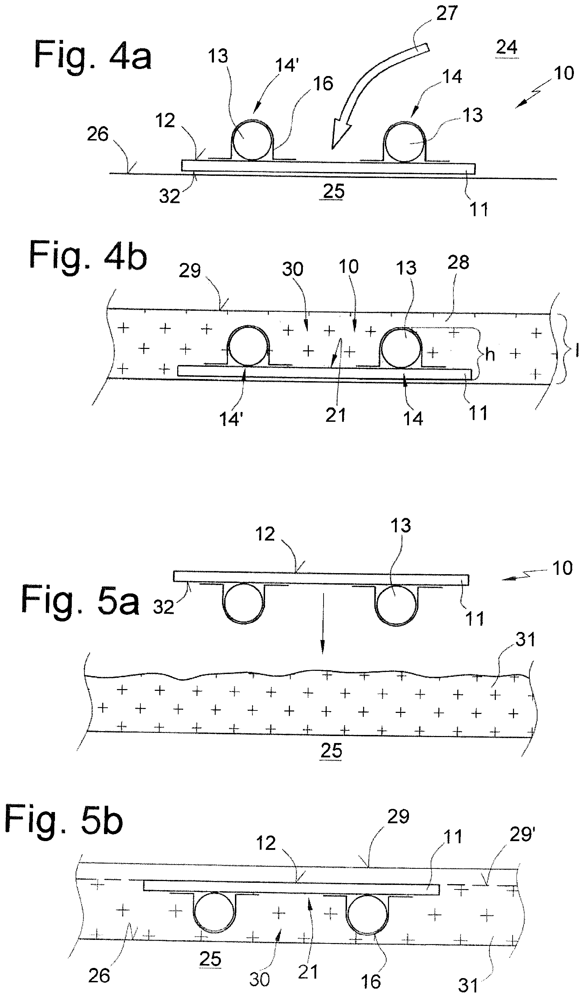

Während das Zwischenprodukt gemäß Fig. 1, 2 oder 3 an einem Produktionsort 23 erstellt wird (bei dem es sich bspw. um ein Produktionsgebäude oder eine Fabrik oder ähnliches handeln kann), wird es dort typischerweise nicht verbaut, sondern zwecks Einrichtung der Fußbodenheizung an einen anderen Ort 24 vebracht und dort ausweislich der Fig. 4 oder 5 eingesetzt.

Bei diesem Ort 24 kann es sich bspw. um ein Gebäude oder einen Raum handeln, welcher mit einer Fußbodenheizung ausgestattet werden soll (wobei natürlich auch zu erwärmende Freiflächen wie bspw. Terrassen oder ähnliches in Frage kommen). Dieser erste Ort 24 ist dabei typischerweise entfernt von dem Produktionsort oder zweiten Ort 23 befindlich. Es gilt daher typischerweise eine Distanz von mehreren (hunderten) Kilometern zu überbrücken. Hierfür können die Zwischenprodukte 10 gemäß den Fig. 1 bis 3 insbesondere mithilfe von Transportmitteln, wie Verkehrsmitteln oder ähnlichem, von dem zweiten an den ersten Ort transportiert werden.

Insbesondere kann die an dem ersten Ort 24 zu errichtende Fußbodenheizung zunächst geplant werden (auf später noch genauer zu beschreibende Weise), und es können vom ersten Ort 24 aus spezifische Zwischenprodukte 10 angefordert werden.

Ist ein Zwischenprodukt 10 am ersten Ort 24 angelangt, so kann die Fußbodenheizung, bspw. wie in den Fig. 4a und 4b gezeigt, eingerichtet werden.

Fig. 4a und 4b zeigen hierbei einen Querschnitt durch ein auf einen Rohboden 25 aufgelegtes Zwischenprodukt 10. Bei dem Zwischenprodukt 10 kann es sich (lediglich exemplarisch) um das Zwischenprodukt 10 aus Fig. 1 handeln (naturgemäß sind aber auch sämtliche andere erfindungsgemäße Zwischenprodukte, insbesondere jene gemäß Fig. 2 und 3, in einem identischen Verfahren einsetzbar). Die Schnittansicht des Zwischenprodukts 10 entspricht ungefähr der Schnittlinie IV in Fig. 1.

Auch in dem Querschnitt gemäß Fig. 4a ist demnach das Rohrsystem 13 zu erkennen, nämlich jeweils als Schnitt durch die geraden Abschnitte 14' und 14. Die Abschnitte 14 und 14' sind dabei ausweislich Fig. 4a jeweils mit einem Wärmeleitelement 16 an der Trägerplatte 11 angeordnet.

Die Trägerplatte 11 liegt mit ihrer Unterseite 32 auf der Oberseite 26 des Rohbodens 25 auf.

Der Rohboden kann hierbei den reinen Betonboden umfassen und gegebenenfalls noch weitere Elemente wie Dämmmaterialien, Schutzfolien oder ähnliches, welche aufgrund der Übersichtlichkeit aber sämtlich in den Fig. 4 und 5 nicht dargestellt sind.

Insbesondere verdeutlicht der übertrieben dargestellte Spalt zwischen der Unterseite 32 der Trägerplatte 11 und der Oberseite 26 des Rohbodens 25 in Fig. 4a (welcher Spalt in Wirklichkeit tatsächlich überhaupt nicht vorhanden ist), dass die Trägerplatte 11 haftmittelfrei (also ohne Klebstoff oder Verbindungstoff oder ähnliches) auf dem Rohboden 25 aufliegt.

Das Zwischenprodukt 10 ist im Wesentlichen durch sein größeres Gewicht (im Vergleich zu einem Kunststoffrohr und aufgrund der Trägerplatte) gegen ein Verrutschen gesichert, wobei das Zwischenprodukt 10 spätestens bei einem Anschluss an weitere Rohre und/oder Zwischenprodukte ohnehin in seiner Lage fixiert wird.

Nach dem Auflegen des Zwischenproduktes 10 werden gegebenenfalls weitere Zwischenprodukte 10 in dem zu bestückenden Raum verlegt, und diese Zwischenprodukte werden dann verbunden, bspw. über separate Rohre oder Anschlussstücke oder ähnliches.

Wie später noch genauer beschrieben wird, können auch weitere Rohrsysteme ohne Trägerplatte zusätzlich verlegt werden.

Ist eine Verbindung der Zwischenprodukte untereinander und eine Anbindung an einen Zulauf bzw. Ablauf verlegt, kann in einem weiteren Arbeitsschritt das Zwischenprodukt 10 mit einem fließfähigen Estrich übergossen werden, was bereits in Fig. 4a durch den Pfeil 27 angedeutet wird.

Mit anderen Worten wird die Fußbodenheizung ausweislich der Fig. 4 (aber auch der nachfolgend beschriebenen Fig. 5) in einem Nassverfahren hergestellt, bei welchem das Zwischenprodukt 10 mit noch flüssigem, jedenfalls fließfähigen, Estrichmaterial in Verbindung kommt und gemäß Fig. 4a übergossen wird.

Ausweislich Fig. 4b umgibt der Estrich 28 anschließend das Zwischenprodukt 10, und insbesondere das Rohrsystem 13. Die Oberseite 29 der Estrich-Schicht ist nach dem Trocknen direkt begehbar und auf ihr kann dann ein Bodenbelag oder eine Dämmschicht, insbesondere zur Akustikdämmung, oder ähnliches aufgebracht werden. Auch begehbarer (Sicht-)Estrich ist einsetzbar, welcher direkt ohne Bodenbelag als Raumboden genutzt wird.

Fig. 4b lässt dabei erkennen, dass die Schichtdicke des Estrich eine Höhe I aufweist, während das Zwischenprodukt 10 eine Höhe h aufweist, wobei gilt dass h < l ist. Mit anderen Worten wird die Estrichschichtdicke I dabei derart gewählt, dass das Zwischenprodukt 10 vollständig im Estrich "versinkt".

Da der Durchmesser eines Metallrohres, insbesondere eines Kupferrohres, typischerweise deutlich geringer ist als derjenige eines vergleichbaren Kunststoffrohres, kann mit dem Ziel, das Zwischenprodukt vollständig versinken zu lassen, somit im Vergleich zu dem Stand der Technik eine geringere Estrich-Dicke I erreicht werden.

Insbesondere lässt Fig. 4b erkennen, dass der Estrich 28 auch in den Zwischenraum 30 zwischen den beiden geraden Rohrabschnitten 14 und 14' gelangt, welcher insbesondere dem Verbindungsbereich 21 der Trägerplatte 11 zugeordnet ist.

Ein anderes Ausführungsbeispiel für die Einrichtung einer Fußbodenheizung zeigt Fig. 5: So ist in Fig. 5a ein sogenannter Tauchestrich 31, bei dem es sich um einen herkömmlichen Estrich 28 mit mehr oder weniger speziellen Eigenschaften handeln kann, frisch gegossen, was man an der wellig dargestellten Oberfläche in Fig. 5a erkennen kann. In diesen Tauchestrich 31 kann das Zwischenprodukt 10 eingebracht werden, typischerweise mit der Unterseite 32, auf welcher das Rohrsystem 13 in diesem Beispiel angeordnet ist, voran.

Das Zwischenprodukt wird hierbei, wie der Figurenübergang von Fig. 5a zu Fig. 5b zeigt, entlang des Pfeils in Fig. 5a in den Tauchestrich 31 eingetaucht, insbesondere bis eine vorgegebene Tauchtiefe erreicht wird oder bis das Wärmeleitelement 16 auf die Oberseite 26 des Rohbodens 25 stößt (dies ist in den Figuren lediglich der Übersichtlichkeit halber nicht dargestellt). Nach Erhärten des Estrichs 31 erhält man so ebenfalls eine glatte Bodenfläche 29, welche das Zwischenprodukt 10 völlig abdeckt, sodass das Zwischenprodukt 10 insgesamt vollständig von Estrich 31 umgeben ist.

Fig. 5b zeigt eine Alternative. Dort ist nämlich gestrichelt eine alternative Oberseite 29' des fertiggestellten Bodens angedeutet, welche bündig mit der Oberseite 12 des Zwischenproduktes 10 verläuft, die in diesem Beispiel einen Teil des begehbaren Bodens mitausbilden würde (wobei diese Variante wohl insbesondere nur in Betracht kommt, wenn ein zusätzlicher Bodenbelag eingesetzt wird). In beiden Fällen ist jedoch insbesondere das Rohrsystem 13 vollständig im Estrich 31 verlegt.

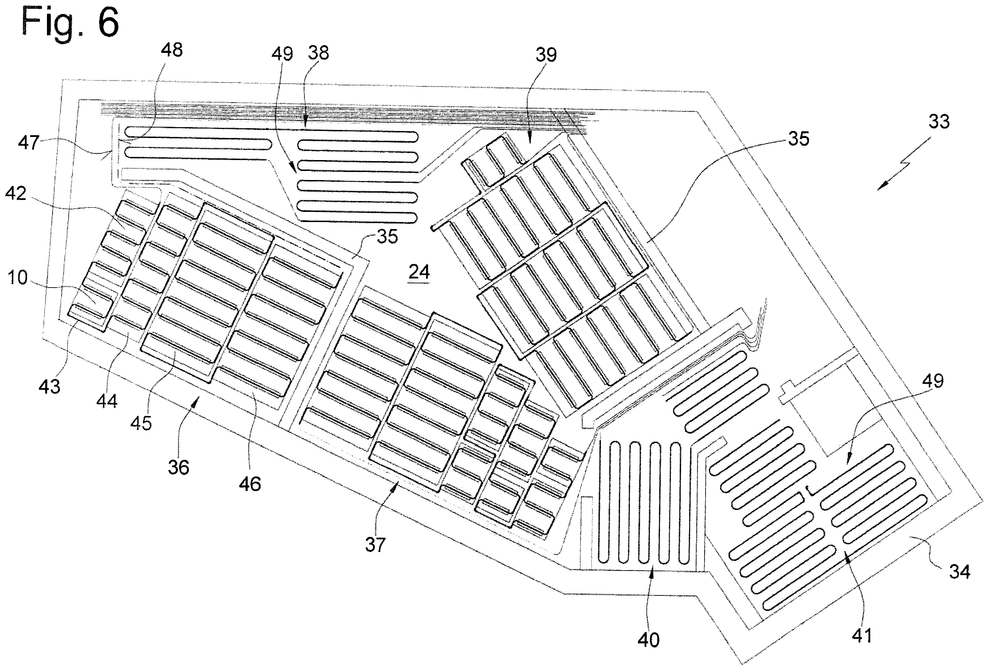

Schließlich zeigt Fig. 6 einen exemplarischen ersten Ort 24, also einen Errichtungsort für die Fußbodenheizung 33. Bei dem exemplarischen Errichtungsort 24 handelt es sich demnach bspw. um eine Gebäudeetage oder einen Gebäuderaum 24, welcher in Fig. 6 mit Außenmauern 34 sowie Trennmauern 35 dargestellt ist.

Fig. 6 zeigt dabei die erfindungsgemäße Fußbodenheizung 33 unter Fortlassung der Estrich-Schicht (und gegebenenfalls darauf angebrachter Elemente wie Fußbodenbelag oder Akustikdämmung oder ähnlichem), insbesondere um den Einsatz erfindungsgemäßer Zwischenprodukte und anderer Rohrsysteme in der erfindungsgemäßen Fußbodenheizung 33 zu demonstrieren.

So lässt sich der dargestellte Wohnraum 24 in verschiedene Abschnitte 36 bis 41 unterteilen, welche insbesondere durch die Trennwände 35 gegliedert sind oder deren Einteilung sonstigen Überlegungen unterliegt.

Ein erster Bereich 36 ist hierbei exemplarisch mit mehreren erfindungsgemäßen Zwischenprodukten unterschiedlicher Längs- und/oder Quererstreckungen versehen.

So weist dieser Bereich 36 bspw. das erfindungsgemäße Zwischenprodukt 10 gemäß Fig. 1 auf. Dieses ist in Längsrichtung L zu einem weiteren Zwischenprodukt 42 (einer identischen Querlänge bzw. Breite aber anderen Länge) benachbart. Das Zwischenprodukt 42 weist bspw. fünf gerade Abschnitte auf.

Die beiden Zwischenprodukte 10 und 42 sind unmittelbar strömungstechnisch miteinander verbunden, bspw. mithilfe eines nicht näher dargestellten Zwischenstückes oder ähnlichem.

Des Weiteren ist das Zwischenprodukt 10 aber auch über einen zusätzlichen Leitungsabschnitt 43 mit einem weiteren Zwischenprodukt 44 verbunden, welches ebenfalls dieselbe Querlänge aufweist, aber in Längsrichtung noch länger ausgebildet ist (bei gleichem Rohrabstand, insbesondere mit sieben geraden Abschnitten).

Dieses Zwischenprodukt 44 ist dann wieder an ein weiteres Zwischenprodukt 45 angeschlossen, welches sich bei gleicher Erstreckung in Längsrichtung von dem Zwischenprodukt 44 in seiner Quererstreckung unterscheidet und etwa doppelt so breit ausgebildet ist (die Trägerplatte des Zwischenproduktes 45 weist somit in etwa doppelt so viel Fläche auf wie diejenige des Zwischenproduktes 44).

Vervollständigt wird der Bereich 36 dann noch von einem letzten Zwischenprodukt 46, welches dem Zwischenprodukt 45 im Wesentlich identisch entspricht.

Sämtliche Zwischenprodukte des Bereiches 36 sind über eine gemeinsame Zuleitung bzw. Ableitung 47 und 48 an ein nicht dargestelltes Leitungssystem der Fußbodenheizung 33 angeschlossen.

Vergleichbare Zwischenprodukte und ein vergleichbarer Aufbau lassen sich auch für die Bereiche 37 (hier sind zwei Zwischenprodukte 10' verbaut) und 39 des Ortes 24 feststellen.

Die Bereiche 38, 40 und 41 unterscheiden sich dann insofern von den anderen Bereichen, als dass hier die vorkonfektionierten Zwischenprodukte nicht ohne Weiteres einsetzbar sind, bspw. da es sich um zu schmale Flächen handelt, schräge Wandflächen vorgesehen sind oder ähnliches.

In diesen Bereichen 38, 40 und 41 sind aber ebenfalls Rohrsysteme verlegt, nämlich sogenannte Hilfsrohrsysteme 49, welche keine Trägerplatte aufweisen.

Diese Hilfsrohrsysteme 49 können insbesondere an die Zwischenprodukte angebunden sein und/oder selbstständig an die zentralen Zuleitungen und Ableitungen der Fußbodenheizung 33.

Die Hilfsrohrsysteme 49 weisen in dem Ausführungsbeispiel gemäß Fig. 6 sämtlich ebenfalls eine Mäanderform auf und können bspw. auch am zweiten Ort 23 vorgefertigt worden sein und/oder gemeinsam mit den Zwischenprodukten an den ersten Ort 24 geliefert worden sein. Alternativ können sie aber auch erst vor Ort, also am Ort 24, hergestellt und bspw. in die notwendige Form gebogen worden sein.

Ein derartiger Anwendungsfall kann bspw. entstehen, wenn für einen Ort 24 zunächst vorgesehen war, dass bestimmte Bereiche 36, 37 und 39 mit einer Fußbodenheizung versehen werden sollen, man entsprechende Zwischenprodukte geordert hat und anschließend feststellt, dass andere Bereiche 38, 40 und 41 nun ebenfalls doch noch von der Fußbodenheizung umfasst werden sollen, wobei eine kurzfristige Bestellung weiterer Zwischenprodukte vielleicht gar nicht möglich ist. Auch in diesem Fall kann man das in Fig. 6 beschriebene Verfahren nutzen, bei dem vorgefertigte Zwischenprodukte durch trägerplattenfreie Rohrsysteme ergänzt werden.

Nach dem Verlegen und Anschließen sowohl der Zwischenprodukte als auch der Hilfsrohrsysteme 49 kann dann an dem Ort 24 der Estrich vergossen werden. Insofern handelt es sich bei der Fußbodenheizung 33 gemäß Fig. 6 insbesondere um ein System, welches in etwa gemäß dem Verfahren hergestellt wurde, welches in Fig. 4 dargestellt ist. Hierbei sind sowohl die Zwischenprodukte, als auch die Hilfsrohrsysteme 49 typischerweise vollständig in den Estrich eingebettet.

Abschließend soll anhand Fig. 6 darauf hingewiesen werden, dass ein erfindungsgemäßes Verfahren auch den Schritt des Planens der Fußbodenheizung umfassen kann: So kann, insbesondere softwareunterstützt, zunächst eine Karte des Ortes 24, gegebenenfalls unter Einzeichnung von Außenmauern und/oder Trennmauern, erstellt werden, anhand deren dann ein Plan erstellt wird, welche Zwischenprodukte benötigt werden und/oder wo diese angeordnet werden. Schließlich können anhand dieses Plans auch Bereiche identifiziert werden, in welchen Hilfsrohrsysteme verwendet werden sollen.

Eine solche Planung kann mithilfe eines Softwareprogramms (bspw. einer App) erfolgen, bei welchem der User insbesondere Zugriff auf die vorkonfektionierten Zwischenprodukte hat. Der User kann diese Zwischenprodukte in der Software bspw. virtuell auf dem Plan positionieren und so Bereiche identifizieren, welche für Zwischenprodukte geeignet sind (und solche, in welchen Hilfsrohrsysteme Einsatz finden sollen).

Eine derartige Software kann dann auch an ein e-Commerce-System des Zwischenproduktherstellers angeschlossen sein, sodass für eine geplante Fußbodenheizung benötigte Zwischenprodukte direkt online bestellbar sind.

## Patentansprüche

1. Verfahren zur Einrichtung einer Fußbodenheizung (33), umfassend die Schritte:
• Fertigstellen eines Zwischenproduktes (10), umfassend eine, insbesondere rechteckige, Trägerplatte (11) aus Metall, an dessen einer Seite (12, 32) ein Rohrsystem (13) aus Metall, zum Leiten eines Mediums, von mindestens einem Wärmeleitelement (16) festgelegt ist,
**dadurch gekennzeichnet, dass** das Verfahren den folgenden Schritt umfasst:
• Füllen eines von dem Rohrsystem (13) ausgebildeten Zwischenraumes (30) mit gegossenem Estrich (28, 31).

2. Verfahren nach Anspruch 1, **dadurch gekennzeichnet, dass** das Füllen durch ein Übergießen (27) des Zwischenproduktes (10) mit Estrich (28) erfolgt, wobei das Rohrsystem (13) insbesondere auf der Oberseite (12) der Metall-Trägerplatte (11) angeordnet ist.

3. Verfahren nach Anspruch 1, **dadurch gekennzeichnet, dass** das Füllen durch ein Eintauchen des Zwischenproduktes (10) in den gegossenen Estrich (31) erfolgt, wobei das Rohrsystem (13) insbesondere auf der Unterseite (32) der Metall-Trägerplatte angeordnet ist.

4. Verfahren nach einem der voranstehenden Ansprüche **dadurch gekennzeichnet, dass** das Rohrsystem (13) des Zwischenproduktes im Wesentlichen innerhalb der Kontur der Trägerplatte (11) angeordnet ist, insbesondere zu mindestens 75 %, weiter insbesondere zu mindestens 90 %.

5. Verfahren nach einem der voranstehenden Ansprüche **dadurch gekennzeichnet, dass** das Rohrsystem (13) mindestens einen geraden Abschnitt (14) aufweist, welcher im Wesentlichen über seine gesamte Länge auf der Trägerplatte (11) aufliegt, vorzugsweise sogar mindestens zwei solcher Abschnitte (14).

6. Verfahren nach einem der voranstehenden Ansprüche, **dadurch gekennzeichnet, dass** die Trägerplatte (11) aus Aluminium(- blech) besteht und/oder eine Dicke von mindestens 0,3 mm, insbesondere mindestens 0,4 mm oder mindestens 0,5 mm, aufweist, und/oder das Rohrsystem (13) aus Kupfer besteht.

7. Verfahren nach einem der voranstehenden Ansprüche, **dadurch gekennzeichnet, dass** die Fußbodenheizung (33) an einem ersten Ort (24) installiert bzw. fertiggestellt wird, an welchem insbesondere das Füllen des Zwischenraumes (30) erfolgt, wobei die Fertigstellung des Zwischenproduktes (10) an einem zweiten, entfernten Ort (23) erfolgt, insbesondere umfassend einen Verfahrensschritt des Verbringens des Zwischenproduktes (10) von dem zweiten (23) an den ersten Ort (24).

8. Verfahren nach einem der voranstehenden Ansprüche, **dadurch gekennzeichnet, dass** in einem Bereich (38, 40, 41) der von der Fußbodenheizung (33) zu bedienenden Fläche, in welchem kein Zwischenprodukt (10) vorgesehen ist, ein, insbesondere mäanderförmiges, Rohrsystem (49) aus Metall verlegt wird, welches nicht an einer Trägerplatte (11) angeordnet ist.

9. Verfahren nach einem der voranstehenden Ansprüche, **gekennzeichnet durch** den Verfahrensschritt:
• Verbinden des Zwischenproduktes (10) als Teil der Heizungsmontage mit mindestens einem weiteren, im Wesentlichen identisch hergestellten Zwischenprodukt (42, 44).

10. Fußbodenheizung (33), umfassend mindestens ein Zwischenprodukt (10) für die Einrichtung einer Fußbodenheizung (33), insbesondere zum Einsatz in einem der voranstehenden Verfahren, wobei das Zwischenprodukt (10) ein Rohrsystem (13) aus Metall, mindestens ein Wärmeleitelement (16) und eine Trägerplatte (11) aus Metall umfasst, wobei an einer Seite (12, 32) der Trägerplatte (11) das Rohrsystem (13) aus Metall, zum Leiten eines Mediums, von dem mindestens einen Wärmeleitelement (16) festgelegt ist,
**dadurch gekennzeichnet, dass** ein Zwischenraum (30) des Rohrsystems (13) des Zwischenproduktes (10) mit gegossenem Estrich (28, 31) gefüllt ist.

11. Fußbodenheizung (33) nach Anspruch 10, **dadurch gekennzeichnet, dass** in einem Bereich (38, 40, 41) der Fußbodenheizung (33), in welchem kein Zwischenprodukt (10) vorgesehen ist, ein, insbesondere mäanderförmiges, Rohrsystem (49) aus Metall verlegt ist, welches nicht an einer Trägerplatte (11) angeordnet ist.

## Claims

1. A method of installing an underfloor heating (33) comprising the steps of:
• manufacturing an intermediate product (10) comprising a, in particular rectangular, metal support plate (11), on one side (12, 32) of which a metal pipe system (13) for conducting a medium is fixed by at least one heat-conducting element (16),
**characterised in that** the method comprises the following step:
• filling an intermediate space (30) formed by the pipe system (13) with poured screed (28, 31).

2. A method according to claim 1, **characterised in that** the filling is carried out by pouring (27) screed (28) over the intermediate product (10), the pipe system (13) in particular being arranged on the upper side (12) of the metal support plate (11).

3. A method according to claim 1, **characterised in that** the filling is carried out by immersing the intermediate product (10) in the poured screed (31), the pipe system (13) in particular being arranged on the underside (32) of the metal support plate.

4. A method according to one of the preceding claims, **characterised in that** the pipe system (13) of the intermediate product is arranged essentially within the contour of the carrier plate (11), in particular to at least 75%, further in particular to at least 90%.

5. A method according to one of the preceding claims, **characterised in that** the pipe system (13) has at least one straight section (14) which rests on the carrier plate (11) over substantially its entire length, preferably even at least two such sections (14).

6. A method according to one of the preceding claims, **characterised in that** the carrier plate (11) consists of aluminium (sheet) and/or has a thickness of at least 0.3 mm, in particular at least 0.4 mm or at least 0.5 mm, and/or the pipe system (13) consists of copper.

7. A method according to one of the preceding claims, **characterised in that** the underfloor heating (33) is installed or finished at a first location (24), at which in particular the filling of the intermediate space (30) takes place, wherein the finishing of the intermediate product (10) takes place at a second, remote location (23), in particular comprising a method step of transferring the intermediate product (10) from the second (23) to the first location (24).

8. A method according to one of the preceding claims, **characterised in that** in an area (38, 40, 41) of the surface to be served by the underfloor heating (33), in which no intermediate product (10) is provided, a, in particular meandering, pipe system (49) made of metal is laid, which is not arranged on a carrier plate (11).

9. A method according to one of the preceding claims, **characterised by** the method step:
connecting the intermediate product (10) as part of the heating assembly to at least one further, essentially identically produced intermediate product (42, 44).

10. An underfloor heating (33) comprising at least one intermediate product (10) for the installation of an underfloor heating (33), in particular for use in one of the preceding methods, wherein the intermediate product (10) comprises a metal pipe system (13), at least one heat-conducting element (16) and a metal support plate (11), wherein the metal pipe system (13), for conducting a medium, is fixed to one side (12, 32) of the support plate (11) by the at least one heat-conducting element (16), **characterised in that** an intermediate space (30) of the pipe system (13) of the intermediate product (10) is filled with poured screed (28, 31).

11. An underfloor heating (33) according to claim 10, **characterised in that** in a region (38, 40, 41) of the underfloor heating (33) in which no intermediate product (10) is provided, a pipe system (49), in particular a meandering pipe system, made of metal is laid, which is not arranged on a carrier plate (11).

## Revendications

1. Procédé destiné à mettre en place un chauffage au sol (33), comprenant les étapes :
• finaliser un produit intermédiaire (10), comprenant une plaque de support (11) en métal, en particulier rectangulaire, sur un côté (12, 32) de laquelle est fixé un système de tuyaux (13) en métal, pour guider un milieu d'au moins un élément conducteur de chaleur (16),
**caractérisé en ce que** le procédé comprend l'étape suivante :
• remplir avec une chape coulée (28, 31) un espace intermédiaire (30) formé par le système de tuyaux (13).

2. Procédé selon la revendication 1, **caractérisé en ce que** le remplissage s'effectue par la coulée (27) de la chape (28) sur le produit intermédiaire (10), dans lequel le système de tuyaux (13) est disposé en particulier sur la face supérieure (12) de la plaque de support en métal (11).

3. Procédé selon la revendication 1, **caractérisé en ce que** le remplissage s'effectue par l'immersion du produit intermédiaire (10) dans la chape coulée (31), dans lequel le système de tuyaux (13) est disposé en particulier sur la face inférieure (32) de la plaque de support en métal.

4. Procédé selon une des revendications précédentes, **caractérisé en ce que** le système de tuyaux (13) du produit intermédiaire est disposé sensiblement à l'intérieur du contour de la plaque de support (11), en particulier sur au moins 75 %, encore plus particulièrement sur au moins 90 %.

5. Procédé selon une des revendications précédentes, **caractérisé en ce que** le système de tuyaux (13) présente au moins une section droite (14) qui repose sensiblement sur toute sa longueur sur la plaque de support (11), de préférence même au moins deux de telles sections (14).

6. Procédé selon une des revendications précédentes, **caractérisé en ce que** la plaque de support (11) est composée en (tôle) aluminium et/ou présente une épaisseur d'au moins 0,3 mm, en particulier d'au moins 0,4 mm ou d'au moins 0,5 mm, et/ou le système de tuyaux (13) est composé en cuivre.

7. Procédé selon une des revendications précédentes, **caractérisé en ce que** le chauffage au sol (33) est installé respectivement finalisé au niveau d'un premier emplacement (24), au niveau duquel en particulier s'effectue le remplissage de l'espace intermédiaire (30), dans lequel la finalisation du produit intermédiaire (10) s'effectue au niveau d'un second emplacement distant (23), en particulier comprenant une étape de procédé destinée à transférer le produit intermédiaire (10) du second emplacement (23) vers le premier (24).

8. Procédé selon une des revendications précédentes, **caractérisé en ce que**, dans une zone (38, 40, 41) de la surface à desservir par le chauffage au sol (33) où aucun produit intermédiaire (10) n'est prévu, un système de tuyaux (49) en métal, en particulier sinueux, est posé, lequel n'est pas disposé sur une plaque de support (11).

9. Procédé selon une des revendications précédentes, **caractérisé par** l'étape de procédé :
• relier le produit intermédiaire (10) en tant que partie du montage de chauffage avec au moins un autre produit intermédiaire (42, 44) fabriqué sensiblement de manière identique.

10. Chauffage au sol (33), comprenant au moins un produit intermédiaire (10) pour la mise en place d'un chauffage au sol (33), en particulier destiné à une utilisation selon un des procédés précédents, dans lequel le produit intermédiaire (10) comprend un système de tuyaux (13) en métal, au moins un élément conducteur de chaleur (16) et une plaque de support (11) en métal, dans lequel sur un côté (12, 32) de la plaque de support (11) est fixé le système de tuyaux (13) en métal, pour guider un milieu de l'au moins un élément conducteur de chaleur (16),**caractérisé en ce qu'**un espace intermédiaire (30) du système de tuyaux (13) du produit intermédiaire (10) est rempli d'une chape coulée (28, 31).

11. Chauffage au sol (33) selon la revendication 10, **caractérisé en ce que**, dans une zone (38, 40, 41) du chauffage au sol (33) où aucun produit intermédiaire (10) n'est prévu, un système de tuyaux (49) en métal, en particulier sinueux, est posé, lequel n'est pas disposé sur une plaque de support (11).
